# EUROPÄISCHE PATENTSCHRIFT

(11) **EP 0 345 536 B1**
(45) Veröffentlichungstag und Bekanntmachung des Hinweises auf die Patenterteilung: **27.04.1994**
(21) Anmeldenummer: 89109359.3
(22) Anmeldetag: 24.05.1989
(51) Int. Cl.: F16C 29/00

(54) **Linearführung**
Linear guide
Guide linéaire

(30) Priorität: 07.06.1988 DE 3819278
(43) Veröffentlichungstag der Anmeldung: 13.12.1989
(73) Patentinhaber: Schwäbische Hüttenwerke Gesellschaft mit beschränkter Haftung, D-73414 Aalen (DE)
(72) Erfinder: Wiener, Richard, Dipl.-Ing., D-7080 Aalen 1 (DE); Merz, Rolf, D-7080 Aalen-Wasseralfingen (DE)
(74) Vertreter: Lorenz, Werner, Dipl.-Ing.

(56) Entgegenhaltungen:
- FR-A- 2 387 733
- GB-A- 2 136 529
- GB-A- 2 142 410
- US-A- 2 945 366

## Beschreibung

Die Erfindung betrifft eine Linearführung mit wenigstens zwei in Lagerböcken gelagerten Führungsstangen, auf denen je ein Führungsschlitten angeordnet ist, wobei die Führungsstangen und die Führungsschlitten relativ zueinander verschiebbar sind und wobei die Führungsschlitten mit Antriebsgliedern zur Erzeugung einer Relativbewegung zwischen der Führungsstange und dem Führungsschlitten versehen sind, wobei die Führungsstangen jeweils über einen Teilumfangsbereich mit einer Verzahnung versehen sind, die mit einem in dem Führungsschlitten gelagerten Ritzel zusammenarbeitet.

Eine Linearführung dieser Art ist in der GB-A-2 136 529 beschrieben.

Linearführungen werden zur Durchführung von Linearbewegungen auf vielen Gebieten eingesetzt, wie z.B. im Maschinenbau, in der Handhabungstechnik, im Vorrichtungsbau und in der Feinwerktechnik. Linearführungen können z.B. als Bausteine für Greifer, Roboter, Verschiebetische, Halterungen, Meßwerkzeuge und dgl. verwendet werden. Den Kern der Linearführung bilden dabei ein oder zwei Führungswellen, auf der bzw. auf denen ein Führungsschlitten angeordnet ist, der entlang der Welle bzw. den Wellen verschiebbar ist. In Umkehrung kann jedoch auch der Führungsschlitten ortsfest verbleiben und der oder die beiden Wellen werden verschoben. Für eine reibungsarme Verschiebung und eine hohe Belastbarkeit sind in dem Führungsschlitten im allgemeinen sogenannte Kugelbüchsen bzw. Linearkugellager mit mehreren Kugelumläufen angeordnet.

Die Relativbewegung zwischen der Führungsstange und dem darauf angeordneten Führungsschlitten kann auf verschiedene Weise erreicht werden. Bekannt sind hierfür Kugelrollspindeln, wobei eine Spindel parallel zu der Führungsstange verläuft und eine Spindelmutter in dem Führungsschlitten angeordnet ist. Wird die Spindel angetrieben, bewegt sich entsprechend der Führungsschlitten.

Nachteilig dabei ist jedoch, daß neben einem zusätzlich notwendigen Bauraum für die Spindel diese nicht unterstützt gelagert werden kann. Dies bedeutet, daß die Belastbarkeit der Spindel und deren Baulänge beschränkt ist.

Aus der Praxis bekannt sind auch Antriebssysteme mit Zahnriemen oder dgl., was jedoch ebenfalls einen erhöhten Aufwand an zusätzlichen Bauteilen und an Bauraum bedeutet.

Ebenfalls aus der Praxis bekannt ist es bereits, eine Zahnstange parallel zu der Führungsstange anzuordnen, die mit einem Gegenglied, im allgemeinen einem Ritzel, zur Verschiebung des Führungsschlittens zusammenarbeitet. Dabei sind jedoch ebenfalls zusätzliche Bauteile und ein höherer Aufwand notwendig. Außerdem ist eine derartige Linearführung ebenfalls Beschränkungen hinsichtlich ihrer Einsatzmöglichkeit unterworfen.

Der vorliegenden Erfindung liegt daher die Aufgabe zugrunde eine Linearführung der eingangs erwähnten Art zu schaffen, die bei kleiner Baugröße und im Bedarfsfalle hoher Belastung universell einsetzbar ist, insbesondere vielseitig kombinierbar ist und mit verschiedenen Baugrößen ein Baukastensystem bildet.

Erfindungsgemäß wird diese Aufgabe dadurch gelöst, daß die Führungsschlitten unmittelbar miteinander verbunden sind, an einander zugekehrten Verbindungsflächen übereinstimmende Bohrbilder aufweisen, so daß mehrere Führungsschlitten und mit diesen zusammenarbeitende Führungsstangen nach dem Baukastenprinzip miteinander verbindbar und kombinierbar sind.

Erfindungsgemäß sind für den Antrieb der Linearführung nunmehr keine separaten Antriebselemente mehr erforderlich. Gehärtete Führungsstangen bei einer Doppellinearführung sind mit einer ebenfalls gehärteten Verzahnung versehen und bilden auf diese Weise sowohl die Führung als auch jeweils ein Element des Antriebes. Auf diese Weise wird eine sehr kompakte Baugröße erreicht. Dies bedeutet, zusätzliche aufwendige mechanische Antriebselemente können entfallen. Zugleich bleibt der Raum zwischen zwei parallel angeordneten Führungsstangen frei als Arbeitsbereich für die senkrechte Z-Achse.

Durch die Standardisierung des Führungsschlittens lassen sich auf beliebige Weise weitere Linearführungen zu einer Einheit verbinden. Auf diese Weise können Linearbewegungen in mehreren Achsrichtungen erfolgen, was insbesondere für Roboterarbeiten von Vorteil ist.

Durch das Fehlen von zusätzlichen Teilen für den Antrieb wird die erfindungsgemäße Linearführung auch deutlich leichter im Gewicht und weiterhin ist durch ihre Ausgestaltung ein großer Anwendungsbereich gegeben. Ein sehr bedeutender Vorteil gegenüber bekannten Linearführungen besteht darin, daß praktisch unbegrenzte Führungslängen möglich sind. Im Bedarfsfalle ist es lediglich erforderlich entsprechend Führungsstangen hintereinander anzuordnen, wobei lediglich dafür zu sorgen ist, daß die Verzahnungen im Übergangsbereich einander angepaßt sind.

Weiterhin ist von Vorteil, daß die jeweilige Führungsstange beliebig in die Linearführung so eingebaut sein kann, daß die darin eingebrachte Verzahnung z.B. im unteren oder im oberen Bereich der Führungsstange oder auch auf einer Seite liegt. Als Verzahnung kann sowohl eine Gerad- als auch eine Schrägverzahnung vorgesehen sein.

Im Gegensatz zu den meisten bekannten Linearführungen ergibt eine Anordnung der Verzahnung an einer Seite oder im oberen Bereich die Möglichkeit, die Führungsstange auf der Unterseite jeweils in einem Stützlager oder einer Stützschiene aufzulagern, wodurch eine hohe Belastbarkeit gegeben ist und große Vorschubkräfte möglich sind.

Die Führungsstange mit ihrer Verzahnung wird man im allgemeinen induktiv härten. Hierzu wird man in die ungehärtete Führungsstange die Verzahnung einbringen, wonach die induktive Härtung mit einem Rundinduktor erfolgt. Damit es aufgrund einer zu großen Härte nicht zu einem Ausbrechen der Zähne kommt, wird man dabei in vorteilnafter Weise den Magnetfluß während der Induktionshärtung und damit die Temperatur der zu härtenden Führungsstange so steuern, daß im Bereich der Verzahnung der Magnetfluß niedriger ist als im übrigen Bereich. Dies kann z.B. dadurch erfolgen, daß durch über den Umfang des Rundinduktors verteilt angeordnete Blechpakete, die eine Magnetflußerhönung ergeben, der Magnetfluß in dem nicht verzahnten Bereich der Führungsstange höher ist. In diesem Falle ist es lediglich erforderlich, die zu härtende Führungsstange unverdreht durch den Rundinduktor durchzuschieben.

Im allgemeinen wird es ausreichend sein, wenn sich die Verzahnung über in etwa ein Fünftel des Umfangsbereiches der Führungsstange erstreckt. Zu berücksichtigen ist nämlich dabei auch bei Verwendung einer Kugelbüchse in dem Führungsschlitten, daß sich die Verzahnung jeweils nur zwischen zwei Linearkugellager erstrecken kann. Im allgemeinen sind in einer Kugelbüchse vier regelmäßig über den Umfang verteilt angeordnete Linearkugellager vorgesehen, womit eine ausreichende Breite der Verzahnung gegeben ist.

Wenn bei einer Doppel-Linearführung, die zwei auf Abstand voneinander angeordnete Führungsstangen besitzt, vorgesehen sein soll, daß auch der zweite Führungsschlitten angetrieben wird, so kann in einer vorteilhaften Weiterbildung der Erfindung vorgesehen sein, daß die Antriebswelle, auf der das Ritzel angeordnet ist, als eine beidseitig durch den Führungsschlitten geführte Durchgangswelle ausgebildet ist und direkt oder indirekt mit einer zweiten Antriebswelle verbunden ist, oder daß auf der verlängerten Antriebswelle ein zweites Ritzel angeordnet ist, das in Antriebsverbindung mit einer auf Abstand zu der ersten Führungsstange angeordneten zweiten Führungsstange steht.

Wenn in einer weiteren Ausgestaltung der Erfindung vorgesehen ist, daß auf dem Führungsschlitten ein weiterer Führungsschlitten so angeordnet ist, daß die Längsachse der damit zusammenarbeitenden zweiten Führungsstange senkrecht zu der Längsachse der ersten Führungsstange liegt, so wird eine Linearführung geschaffen, bei der Bewegungen in zwei Achsrichtungen möglich sind.

Eine Bewegung in alle drei Achsrichtungen ergibt sich, wenn in einer Weiterbildung vorgesehen ist, daß ein dritter Führungsschlitten vorgesehen ist, der mit einer dritten Führungsstange zusammenarbeitet, deren Längsachse senkrecht zu der Längsachse der zweiten Führungsstange und senkrecht zu der Längsachse der ersten Führungsstange liegt.

Nachfolgend ist ein Ausführungsbeispiel der Erfindung anhand der Zeichnung prinzipmäßig beschrieben.

Es zeigt:
- Figur 1:: eine Linearführung teilweise im Schnitt;
- Figur 2:: eine Linearführung anderer Ausgestaltung;
- Figur 3:: eine Linearführung einer dritten Variante;
- Figur 4:: ein Linearführungssystem mit einer Bewegungsmöglichkeit in zwei Achsrichtungen;
- Figur 5:: ein Linearführungssystem anderer Ausgestaltung mit einer Bewegungsmöglichkeit in zwei Achsrichtungen;
- Figur 6:: ein Linearführungssystem mit einer Bewegungsmöglichkeit in drei Achsrichtungen.

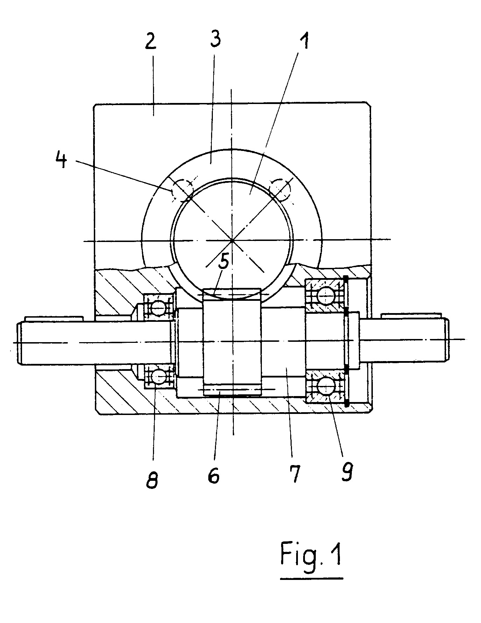

Die Linearführungen nach den Figuren 1 bis 3 sind grundsätzlich von gleichem Aufbau. Der wesentliche Unterschied liegt in dem Einbau einer einzigen Führungsstange 1. Die Linearführungen nach den Figuren 1 bis 3 werden deshalb von der Erfindung nicht erfaßt.

Gemäß Figur 1 ist eine Führungsstange 1 in bekannter Weise von einem Führungsschlitten 2 umgeben, der mit einer Kugelbüchse 3 versehen ist, die vier regelmäßig über den Umfang verteilt angeordnete Linearumläufe 4 besitzt, um eine Relativbewegung zwischen der Führungsstange 1 und dem Führungsschlitten 2 zu ermöglichen. Die Führungsstange 1 kann als Vollstange oder selbstverständlich auch als Hohlstange ausgebildet sein.

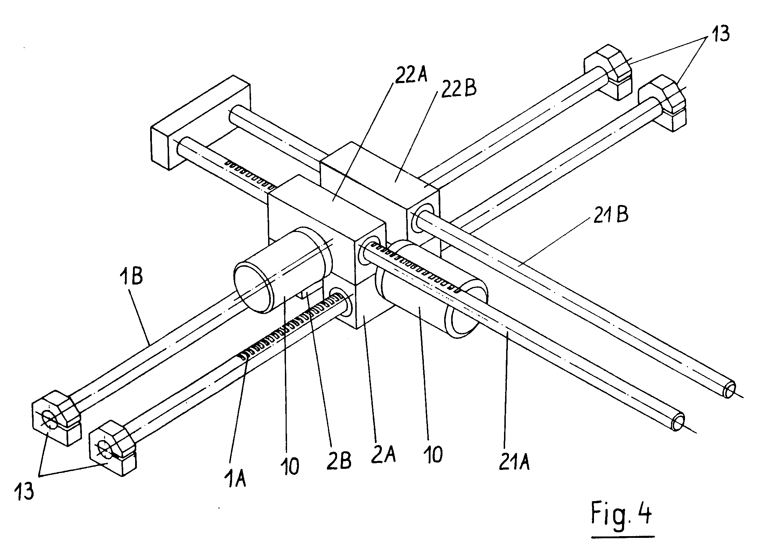

Die Führungsstange 1 ist auf der Unterseite mit einer Querverzahnung 5 versehen. Die Querverzahnung 5 arbeitet mit einem Ritzel 6 zusammen, das auf einer Antriebswelle 7 befestigt ist. Die Antriebswelle 7 ist über Kugellager 8 und 9 in dem Führungsschlitten 2 gelagert. Eingangsseitig ist die Antriebswelle 7 mit einem Antriebsmotor 10 (siehe Figuren 4 bis 6) verbunden, der an der entsprechenden Seite des Führungsschlittens 2 angeflanscht ist. Die in der Figur 1 dargestellte Antriebswelle 7 ist als Durchgangswelle ausgebildet, womit ggf. über eine entsprechende Kupplung eine Antriebsverbindung zu einem zweiten Führungsschlitten oder einer zweiten Antriebswelle geschaffen wird, der bzw. die mit dem ersten Führungsschlitten 2 damit in Antriebsverbindung steht und zusammen mit einer zweiten Führungsstange eine Doppellinearführung bildet. Auf diese Weise ist sowohl eine höhere Belastbarkeit gegeben als auch eine einfache Verdrehsicherung. Selbstverständlich sind jedoch auch bei Linearführungen mit nur einer Führungsstange in bekannter Weise Verdrehsicherungen möglich, welche auch bei der erfindungsgemäßen Ausgestaltung der Führungsstange 1 mit der Verzahnung 5 anwendbar sind.

Ebenso ist die mit der Verzahnung 5 versehene Führungsstange auch für den Einsatz in einer Linearführung nach der DE-A-34 28 680 geeignet.

Die Antriebswelle 7 kann selbstverständlich im Bedarfsfalle jedoch auch im Inneren des Führungsschlittens 2 enden, wenn nur eine einfache Linearführung vorgesehen ist oder wenn bei einer Doppellinearführung für den zweiten Führungsschlitten kein Antrieb vorgesehen ist bzw. wenn der Führungsschlitten 2 als gemeinsamer Führungsschlitten auch die zweite Führungsstange umfaßt.

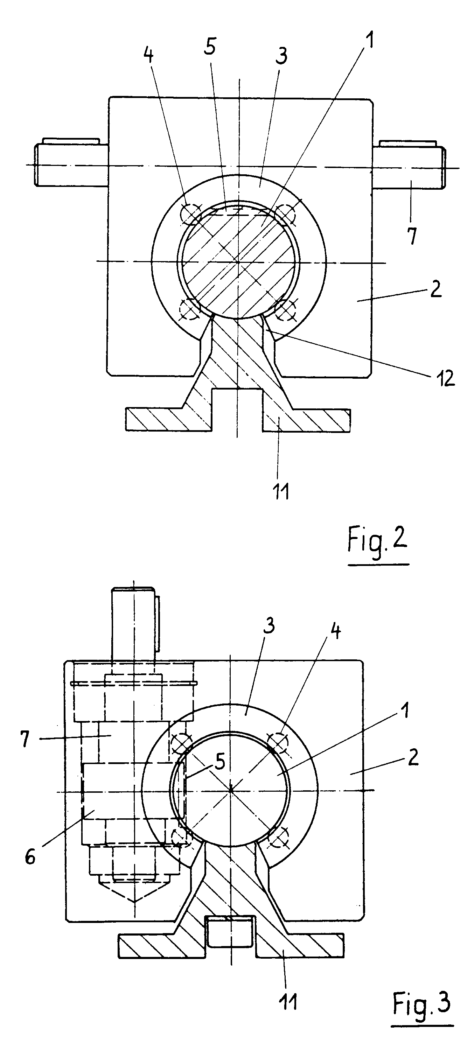

In der Figur 2 ist eine andere Ausgestaltung des Einbaus der Führungsstange 1 in eine Linearführung dargestellt. Wie ersichtlich, befindet sich dabei die Querverzahnung 5 auf der Oberseite, wodurch bei Verwendung einer Kugelbüchse 3 mit einem entsprechend großen Schlitz 12 auf der Unterseite es möglich ist, die Führungsstange 1 auf einer Tragschiene 11 aufzustützen und diese damit zu verbinden, was z.B. über Schrauben erfolgen kann.

Bei einer Anordnung der Querverzahnung 5 der Führungsstange 1 auf einer Seite, wie in der Figur 3 dargestellt, ist es ebenfalls möglich die Führungsstange 1 vollständig auf der Unterseite auf der Tragschiene 11 aufzulagern, womit hohe Kräfte übertragen werden können. In diesen Falle wird man den Antriebsmotor 10 auf der Oberseite des Führungsschlittens 2 anflanschen. Bei Verwendung von standardisierten Bauteilen, insbesondere für den Führungsschlitten 2, läßt sich wie ersichtlich mit stets den gleichen Bauteilen eine vielseitige Kombination und damit ein großer Anwendungsbereich erreichen.

Mögliche Arten von Linearführungssystemen sind in den Figuren 4 bis 6 beispielsweise dargestellt.

So zeigt die Figur 4 jeweils zwei miteinander verbundene Doppellinearführungen, wobei Bewegungsmöglichkeiten in zwei zueinander senkrechten Achsrichtungen möglich sind. Eine erste Doppel-Linearführung, wobei eine Führungsstange 1A mit einer Querverzahnung 5 auf der Oberseite versehen ist, während die zweite Führungsstange 1B diese Linearführung ohne Antrieb ist, ist mit einer zweiten Linearführung, die zwei Führungsstangen 21A und 21B aufweist, verbunden. Bei der zweiten Linearführung ist ebenfalls lediglich eine Führungsstange, nämlich die Führungsstange 21A mit einer Querverzahnung und damit mit einem Antrieb versehen. Der Antrieb erfolgt dabei entsprechend den in den Figuren 1 bis 3 dargestellten Ausgestaltungen mit jeweils einem Antriebsmotor 10 und einem dazugehörigen Ritzel im Inneren des Führungsschlittens 2A bzw. 22A.

Der Führungsschlitten 2B der ersten Linearführung ist über die beiden auf der Oberseite der Führungsschlitten 2A und 2B befestigten Führungsschlitten 22A und 22B in fester Verbindung mit dem angetriebenen Führungsschlitten 2A.

Wie ersichtlich besitzen die Führungsschlitten 2A, 2B, 22A und 22B die gleichen Außenmaße und weisen auch entsprechend standardisierte Verbindungsteile, wie z.B. Standardbohrungen auf, über die Schraubverbindungen erfolgen können. Das Linearführungssystem nach der Figur 4 ist in Wellenlager 13 gelagert.

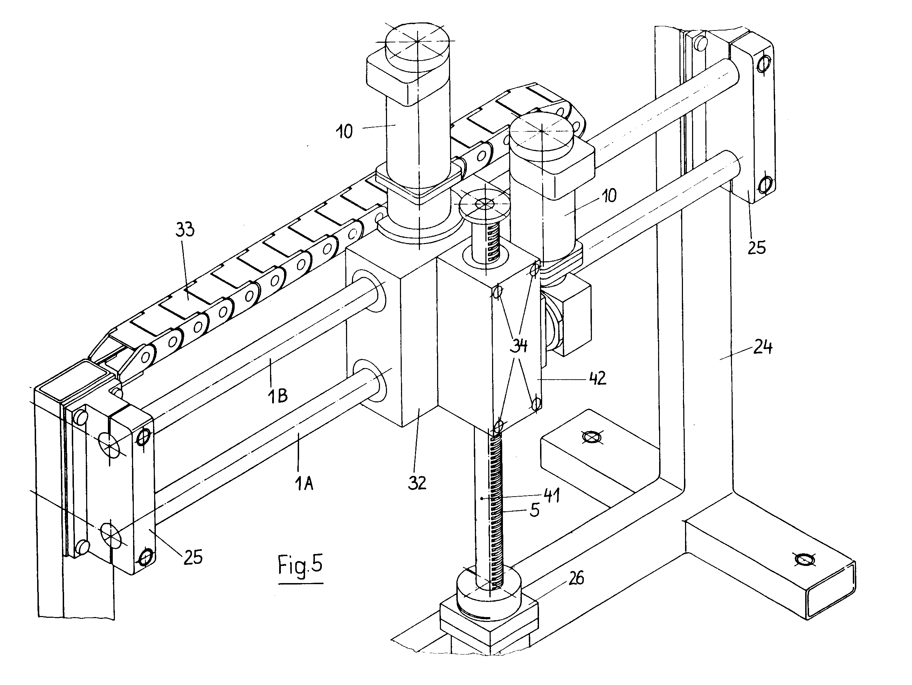

In der Figur 5 sind beispielsweise 4 Standardschrauben 34, die in entsprechende Bohrungen des dahinterliegenden Führungsschlittens 32 geschraubt sind, dargestellt. Zweckmäßigerweise ist der Führungsschlitten 32, der als Doppelführungsschlitten für eine Doppellinearführung ausgebildet ist in seiner Breite so groß, daß die Führungsschlitten 2A, 2B bzw. 22A und 22B darauf in drei Positionen, jeweils außen bzw. mittig, angeordnet werden können, wozu übereinstimmende Bohrbilder dienen. Länge und Breite des Führungsschlittens 32 stimmen dabei mit der Länge der Führungsschlitten 2A,2B bzw. 22A, 22B überein, womit deren Anbringung auch um 90 Grad verdreht möglich wird.

Bei entsprechender Ausgestaltung sind auch winkelige Anordnungen der Führungsschlitten zueinander möglich, so sind z.B. Roboterbewegungen in Winkeln von 45 Grad oder auch in anderen Winkeln denkbar.

Das Linearführungssystem nach der Figur 5 ist in zwei Lagergestellen 24 über Lagerböcke 25 gelagert. In den Lagerböcken 25 sind die beiden Führungsstangen 1A und 1B der ersten Linearführung gelagert, wobei in diesem Falle die Führungsstange 1B mit einer Querverzahnung versehen ist, die entsprechend dem Ausführungsbeispiel nach der Figur 3 auf der hinteren Seite liegt, womit der Antriebsmotor 10 entsprechend auf der Oberseite angeflanscht ist.

Mit der ersten Linearführung wird auf diese Weise eine Querverschiebung möglich. Mit dem an den ersten Führungsschlitten 32 angeflanschten zweiten Führungsschlitten 42 wird über die erforderlichenfalls verdrehgesicherte Führungswelle 41 und ihrer Verzahnung 5 eine zweite Bewegungsmöglichkeit durch die zweite Linearführung in vertikaler Richtung möglich. Auf der Unterseite kann - wie angedeutet - ein Roboterarm 26 angeordnet sein, der auf diese Weise Bewegungen in zwei Achsrichtungen durchführen kann.

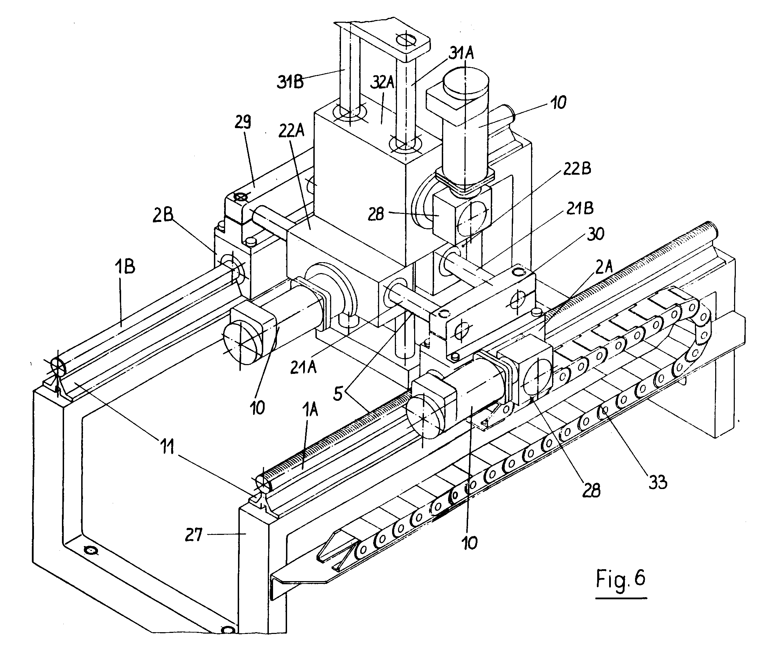

In der Figur 6 ist ein Linearführungssystem dargestellt, durch das Bewegungen in alle drei Achsrichtungen möglich sind. Basis bildet dabei eine erste Linearführung mit zwei Führungsstangen 1A und 1B und Führungsschlitten 2A und 2B, wobei die Führungsstange 1A auf der Oberseite mit der Querverzahnung 5 versehen ist. Auf diese Weise kann die Führungsstange 1A ebenso wie die Führungsstange 1B herkömmlicher Bauart auf ihrer Unterseite vollständig auf einer Tragschiene 11 (entsprechend Figur 2) gelagert und befestigt sein. Die beiden Tragschienen 11 sind auf einem Traggestell 27 befestigt. Der Antriebsmotor 10 ist zum Verschieben des Führungsschlittens 2A entlang der Führungsstange 1A in diesem Falle mit einem Untersetzungsgetriebe 28 versehen, über das er an dem Führungsschlitten 2A angeflanscht ist. Über die Verbindung durch die zweite Linearführung, die über der ersten Linearführung angeordnet ist, wird auch damit der Führungsschlitten 2B verschoben.

Auf den beiden Führungsschlitten 2A und 2B sind Lagerböcke 29 und 30 befestigt, in denen Führungsstangen 21A und 21B gelagert sind, wobei die Führungsstange 21A auf der Unterseite mit einer Querverzahnung 5 für eine Antriebsverbindung mit dem in dem Führungsschlitten 22A angeordneten Ritzel und dem Antriebsmotor 10 für diesen Führungsschlitten in Antriebsverbindung steht. Über einen dritten Führungsschlitten 32A, der so auf den beiden Führungsschlitten 22A und 22B auf der Oberseite angeflanscht ist, daß die beiden Führungsschlitten 22A und 22B miteinander verbunden sind und damit eine Einheit darstellen, wird zusammen mit zwei vertikalen Führungsstangen 31A und 31B eine Bewegungsmöglichkeit in vertikaler Richtung gegeben. In diesem Falle ist die Führungsstange 31A wiederum mit einer Verzahnung versehen (auf der Rückseite und deshalb nicht dargestellt) wodurch über den Antriebsmotor 10 und ein Untersetzungsgetriebe 28, das an einer Seite des Führungsschlittens 32A angeflanscht ist, eine Antriebsverbindung besteht.

Über eine Gliederkette 33 erfolgt, ebenso wie in der Figur 5, die Zuführung der Antriebsleistung für den Antrieb der Antriebsmotore 10, die in einfacher Weise als Elektromotore ausgebildet sind, womit die Energiezufuhr über Elektrokabel erfolgt.

## Patentansprüche

1. Linearführung mit wenigstens zwei in Lagerböcken gelagerten Führungstangen (1A,1B,21A,21B,31A,31B,41), auf denen je ein Führungsschlitten (2A,2B,22A,22B,32A, 32B,32,42) angeordnet ist, wobei die Führungsstangen (1A,1B, 21A,21B,31A,31B,41) und die Führungsschlitten (2A,2B, 22A,22B,32A,32B,32,42) relativ zueinander verschiebbar sind und wobei die Führungsschlitten (2A,2B, 22A,22B,32A,32B,32,42) mit Antriebsgliedern (7,10) zur Erzeugung einer Relativbewegung zwischen der Führungsstange (1A,1B, 21A,21B,31A,31B,41) und dem Führungsschlitten (2A,2B, 22A,22B,32A,32B,32,42) versehen sind, wobei die Führungsstangen (1A,1B,21A,21B,31A,31B,41) jeweils über einen Teilumfangsbereich mit einer Verzahnung (5) versehen sind, die mit einem in dem Führungsschlitten (2A,2B,22A, 22B,32A,32B,32,42) gelagerten Ritzel (6) zusammenarbeitet,
dadurch gekennzeichnet, daß
die Führungsschlitten (2A,2B,22A,22B,32A,32B,32,42) unmittelbar miteinander verbunden sind, an einander zugekehrten Verbindungsflächen übereinstimmende Bohrbilder aufweisen, so daß mehrere Führungsschlitten (2A,2B,22A, 22B,32A,32B,32,42) und mit diesen zusammenarbeitende Führungsstangen (1A,1B,21A,21B,31A,31B,41) nach dem Baukastenprinzip miteinander verbindbar und kombinierbar sind.

2. Linearführung nach Anspruch 1,
**dadurch gekennzeichnet,** daß der Antriebsmotor (10) für das Ritzel (6) an dem Führungsschlitten (2A,2B,22A,22B,32A,32B,42) befestigt ist.

3. Linearführung nach Anspruch 1 oder 2,
**dadurch gekennzeichnet,** daß die Führungsstange (1A,1B,21A,21B,31A,31B,41) so eingebaut ist, daß die Verzahnung (5) im unteren Bereich liegt.

4. Linearführung nach Anspruch 1 oder 2,
**dadurch gekennzeichnet,** daß die Führungsstange (1A,1B,21A,21B,31A,31B,41) so eingebaut ist, daß die Verzahnung (5) im oberen Bereich liegt.

5. Linearführung nach Anspruch 1 oder 2,
**dadurch gekennzeichnet,** daß die Führungsstange (1A,1B,21A,21B,31A,31B,41) so eingebaut ist, daß die Verzahnung (5) an einer Seite liegt.

6. Linearführung nach Anspruch 4 oder 5,
**dadurch gekennzeichnet,** daß die Führungsstange (1A,1B,21A,21B,31A,31B,41) auf der Unterseite auf einem Stützlager oder einer Stützschiene (11) aufgelagert ist.

7. Linearführung nach einem der Ansprüche 1 bis 6,
**dadurch gekennzeichnet,** daß sich die Verzahnung (5) über in etwa ein Fünftel des Umfangsbereiches der Führungsstange (1A,1B, 21A,21B,31A,31B,41) erstreckt.

8. Linearführung nach einem der Ansprüche 1 bis 7,
**dadurch gekennzeichnet,** daß eine Antriebswelle (7), auf der das Ritzel (6) angeordnet ist, als eine beidseitig durch den Führungsschlitten geführte Durchgangswelle ausgebildet ist und direkt oder indirekt mit einer zweiten Antriebswelle verbunden ist oder daß auf der verlängerten Antriebswelle (7) ein zweites Ritzel angeordnet ist, das in Antriebsverbindung mit einer auf Abstand zu der ersten Führungsstange angeordneten zweiten Führungsstange steht.

9. Linearführung nach einem der Ansprüche 1 bis 8,
**dadurch gekennzeichnet,** daß auf dem Führungsschlitten (2A,2B) wenigstens ein weiterer Führungsschlitten (22A,22B) so angeordnet ist, daß die Längsachse der damit zusammenarbeitenden zweiten Führungsstange (21A,21B) senkrecht oder im Winkel zu der Längsachse der ersten Führungsstange (1A,1B) liegt.

10. Linearführung nach Anspruch 9,
**dadurch gekennzeichnet,** daß wenigstens ein dritter Führungsschlitten (32A,32B) vorgesehen ist, der mit einer dritten Führungsstange (31A,31B) zusammenarbeitet, deren Längsachse senkrecht oder im Winkel zu der Längsachse der zweiten Führungsstange (21A,21B) und senkrecht oder im Winkel zu der Längsachse der ersten Führungsstange (1A,1B) liegt.

## Claims

1. Linear guide comprising at least two guide rods (1A, 1B, 21A, 21B, 31A, 31B, 41) arranged in bearing blocks and on each of which a guide block (2A, 2B, 22A, 22B, 32A, 32B, 32, 42) is arranged, the guide rods (1A, 1B, 21A, 21B, 31A, 31B, 41) and the guide blocks (2A, 2B, 22A, 22B, 32A, 32B, 32, 42) being displaceable relative to one another and the guide blocks (2A, 2B, 22A, 22B, 32A, 32B, 32, 42) being provided with drive members (7, 10) for producing a relative movement between the guide rod (1A, 1B, 21A, 21B, 31A, 31B, 41) and the guide block (2A, 2B, 22A, 22B, 32A, 32B, 32, 42), the guide rods (1A, 1B, 21A, 21B, 31A, 31B, 41) each being provided over a partial circumferential region with toothing (5) which cooperates with a pinion (6) mounted in the guide block (2A, 2B, 22A, 22B, 32A, 32B, 32, 42), characterised in that the guide blocks (2A, 2B, 22A, 22B, 32A, 32B, 32, 42) are directly connected to one another, and have corresponding hole patterns on connecting surfaces directed towards one another so that a plurality of guide blocks (2A, 2B, 22A, 22B, 32A, 32B, 32, 42) and guide rods (1A, 1B, 21A, 21B, 31A, 31B, 41) cooperating therewith can be connected together and combined according to the modular principle.

2. Linear guide according to claim 1, characterised in that the drive motor (10) for the pinion (6) is secured to the guide block (2A, 2B, 22A, 22B, 32A, 32B, 42).

3. Linear guide according to claim 1 or claim 2, characterised in that the guide rod (1A, 1B, 21A, 21B, 31A, 31B, 41) is mounted in such a manner that the toothing (5) is situated in the lower region.

4. Linear guide according to claim 1 or claim 2, characterised in that the guide rod (1A, 1B, 21A, 21B, 31A, 31B, 41) is mounted in such a manner that the toothing (5) is situated in the upper region.

5. Linear guide according to claim 1 or claim 2, characterised in that the guide rod (1A, 1B, 21A, 21B, 31A, 31B, 41) is mounted in such a manner that the toothing (5) is situated at one side.

6. Linear guide according to claim 4 or claim 5, characterised in that the guide rod (1A, 1B, 21A, 21B, 31A, 31B, 41) is supported on the underside on a steady bearing or a support rail (11).

7. Linear guide according to one of claims 1 to 6, characterised in that the toothing (5) extends over approximately a fifth of the circumferential region of the guide rod (1A, 1B, 21A, 21B, 31A, 31B, 41).

8. Linear guide according to one of claims 1 to 7, characterised in that a drive shaft (7) on which the pinion (6) is arranged is designed as a through shaft guided on either side by the guide block and is directly or indirectly connected to a second drive shaft or that a second pinion is arranged on the extended drive shaft (7) and is operatively connected to a second guide rod arranged at a distance from the first guide rod.

9. Linear guide according to one of claims 1 to 8, characterised in that at least one further guide block (22A, 22B) is arranged on the guide block (2A, 2B) in such a manner that the longitudinal axis of the second guide rod (21A, 21B) cooperating therewith is situated perpendicularly or at an angle to the longitudinal axis of the first guide rod (1A, 1B).

10. Linear guide according to claim 9, characterised in that at least one third guide block (32A, 32B) is provided and cooperates with a third guide rod (31A, 31B), the longitudinal axis of which is situated perpendicularly or at an angle to the longitudinal axis of the second guide rod (21A, 21B) and perpendicularly or at an angle to the longitudinal axis of the first guide rod (1A, 1B).

## Revendications

1. Guidage linéaire comportant au moins deux barres de guidage (1A, 1B, 21A, 21B, 31A, 31B, 41) montées dans des supports et sur chacune desquelles est disposé un chariot de guidage (2A, 2B, 22A, 22B, 32A, 32B, 32, 42), où les barres de guidage (1A, 1B, 21A, 21B, 31A, 31B, 41) et les chariots de guidage (2A, 2B, 22A, 22B, 32A, 32B, 32, 42) sont coulissants l'un par rapport à l'autre et où les chariots de guidage (2A, 2B, 22A, 22B, 32A, 32B, 32, 42) sont pourvus d'organes d' entraînement (7, 10) pour produire un mouvement relatif entre la barre de guidage (1A, 1B, 21A, 21B, 31A, 31B, 41) et le chariot de guidage (2A, 2B, 22A, 22B, 32A, 32B, 32, 42), chacune des barres de guidage (1A, 1B, 21A, 21B, 31A, 31B, 41) ayant, sur une partie de son pourtour, une denture (5) qui coopère avec un pignon (6) monté dans le chariot de guidage (2A, 2B, 22A, 22B, 32A, 32B, 32, 42),
**caractérisé** en ce que :
les chariots de guidage (2A, 2B, 22A, 22B, 32A, 32B, 32, 42) sont fixés directement l'un à l'autre et comportent des arrangements d'alésages correspondants sur des surfaces de fixation mutuellement opposées, de sorte que plusieurs chariots de guidage (2A, 2B, 22A, 22B, 32A, 32B, 32, 42) et des barres de guidage (1A, 1B, 21A, 21B, 31A, 31B, 41) coopérant avec eux peuvent être fixés et combinés les uns aux autres suivant le principe de la boîte de construction.

2. Guidage linéaire selon la revendication 1, **caractérisé** en ce que le moteur (10) d'entraînement du pignon (6) est fixé au chariot de guidage (2A, 2B, 22A, 22B, 32A, 32B, 42).

3. Guidage linéaire selon la revendication 1 ou 2, **caractérisé** en ce que la barre de guidage (1A, 1B, 21A, 21B, 31A, 31B, 41) est montée de telle façon que la denture (5) se trouve sur sa partie inférieure.

4. Guidage linéaire selon la revendication 1 ou 2, **caractérisé** en ce que la barre de guidage (1A, 1B, 21A, 21B, 31A, 31B, 41) est montée de telle façon que la denture (5) se trouve sur sa partie supérieure.

5. Guidage linéaire selon la revendication 1 ou 2, **caractérisé** en ce que la barre de guidage (1A, 1B, 21A, 21B, 31A, 31B, 41) est montée de telle façon que la denture (5) se trouve sur un côté.

6. Guidage linéaire selon la revendication 4 ou 5, **caractérisé** en ce que la barre de guidage (1A, 1B, 21A, 21B, 31A, 31B, 41) est supportée sur sa face inférieure par une crapaudine ou une barre de soutien (11).

7. Guidage linaire selon l'une des revendications 1 à 6, **caractérisé** en ce que la denture (5) s'étend approximativement sur un cinquième du pourtour de la barre de guidage (1A, 1B, 21A, 21B, 31A, 31B, 41).

8. Guidage linaire selon l'une des revendications 1 à 7, **caractérisé** en ce qu'un arbre d' entraînement (7) sur lequel est monté le pignon (6) est agencé en arbre continu traversant le chariot de guidage de part en part et raccordé directement ou indirectement à un second arbre d' entraînement ou en ce qu'un prolongement de l'arbre d' entraînement (7) est pourvu d'un second pignon qui est en liaison motrice avec une seconde barre de guidage

9. Guidage linaire selon l'une des revendications 1 à 8, **caractérisé** en ce qu'un autre chariot de guidage (22A, 22B) est monté sur ledit chariot de guidage (2A, 2B) de telle façon que l'axe longitudinal de la deuxième barre de guidage (21A, 21B) coopérant avec lui est perpendiculaire ou oblique par rapport à l'axe longitudinal de la première barre de guidage (1A, 1B).

10. Guidage linaire selon la revendication 9, **caractérisé** en ce qu'il est prévu au moins un troisième chariot de guidage (32A, 32B) qui coopère avec une troisième barre de guidage (31A, 31B) dont l'axe longitudinal est perpendiculaire ou oblique par rapport à l'axe longitudinal de la deuxième barre de guidage (21A, 21B) et perpendiculaire ou oblique par rapport à l'axe longitudinal de la première barre de guidage (1A, 1B).
